# EUROPEAN PATENT APPLICATION

(11) **EP 1 014 456 A2**
(43) Date of publication of application: **28.06.2000**
(21) Application number: 99118902.8
(22) Date of filing: 24.09.1999
(51) Int. Cl.: H01L 33/00

(54) **Wavelength-tunable light emitting device**

(30) Priority: 25.09.1998 JP 27199398
(71) Applicant: RIKEN INSTITUTE OF PHYSICAL AND CHEMICAL RESEARCH, Wako-shi, Saitama-ken, 351-01 (JP)
(72) Inventor: Sakurai, Makoto, The Inst. of Phys. and Chem. Res., Wako-shi, Saitama-ken (JP); Aono, Masakazu, The Inst. of Phys. and Chem. Res., Wako-shi, Saitama-ken (JP)
(74) Representative: Liesegang, Roland, Dr.-Ing.

(57) **Abstract**

A wavelength-tunable light emitting device includes a substrate having an atomic-scale structure formed on a surface thereof, a needle member for locally applying a voltage through a vacuum space or a transparent insulating member to the substrate to cause a tunnel current to flow through the atomic-scale structure, and a variable-voltage power supply capable of varying voltage applied across the gap between the substrate and the needle member. A tunnel current flows from the tip of the needle member to the atomic-scale structure when a predetermined voltage is applied across the gap between the substrate and the needle member, and light is emitted from a local region in which the tunnel current flows. The wavelength of the light varies when the voltage applied across the gap between the substrate and the needle member is varied.

## Description

### BACKGROUND OF THE INVENTION

### Field of the Invention

The present invention relates to a wavelength-tunable light emitting device and, mote particularly, to a wavelength-tunable light emitting device capable of being easily and flexibly tuned for emitting light of a desired wavelength.

### Description of the Related Art

Conventional light emitting devices include semiconductor lasers, light-emitting diodes and solid-state lasers, Generally, light emitting devices are fixed-wavelength light emitting devices that emit light of a wavelength specific to a substrate employed therein to produce light. There is a previously proposed wavelength-tunable light emitting device, such as a solid-state laser capable of emitting light of variable wavelength variable in a predetermined wavelength range by utilizing crystal structure (e.g. phonon final level).

### SUMMARY OF THE INVENTION

The prior art wavelength-tunable light emitting device needs to employ a material of a complicated crystal structure as its substrate and has difficulty in securing a sufficiently wide wavelength range in the visible region.

The present invention has been made in view of the foregoing problems and it is therefore an object of the present invention to provide a wavelength-tunable light emitting device capable of being easily and flexibly tuned for emitting light of a desired wavelength.

The present invention provides a wavelength-tunable light emitting device comprising a first member, a second member for locally applying a voltage through a vacuum space or a transparent insulating member to the first member to cause a tunnel current to flow, a variable-voltage power supply capable of varying voltage applied across a gap between the first member and the second member. The voltage applied across the gap between the first member and the second member is varied by the variable-voltage power supply to vary the wavelength of light emitted from a local region (tunneling region) in which the tunnel current flows.

It is preferred that an atomic-scale structure, through which the tunnel current flows, is formed on a surface of the first member. Further, it is preferred that the gap between the first member and the second member is a few nm in length.

According to the present invention, the light emitted from the tunneling region is induced by the optical transition between the respective localized states of the first and second members. In addition, the wavelength of the light emitted from the tunneling region can be varied by varying the voltage applied across the gap between the first member and the second member. Thus, the wavelength-tunable light emitting device is capable of easily and flexibly varying the wavelength of light to be emitted. Since the light can be emitted from a local region in which the tunnel current flows, the wavelength-tunable light emitting device can provide a minute wavelength-tunable light source of a size of an atomic scale.

### BRIEF DESCRIPTION OF THE DRAWINGS

The above and other objects, features and advantages of the present invention will become more apparent from the following description taken in connection with the accompanying drawings, in which:
Figs. 1A and 1B are diagrammatic views of a wavelength-tunable light emitting device in a first embodiment according to the present invention;
Figs. 2A, 2B and 2C are diagrammatic views of a wavelength-tunable light emitting device in a second embodiment according to the present invention;
Fig. 3 is a diagrammatic view of testing apparatus for testing the characteristics of the wavelength-tunable light emitting device shown in Fig. 1A;
Fig. 4 is a graph showing the relation between the wavelength of light emitted from a dangling bond formed on a Si (001)-(2×1)-D surface and voltage; and
Fig. 5 is a graph showing the relation between the wavelength of light emitted from a silver cluster formed on a Si(001)-(2×1)-D surface and voltage.

### DESCRIPTION OF THE PREFERRED EMBODIMENTS

### First Embodiment

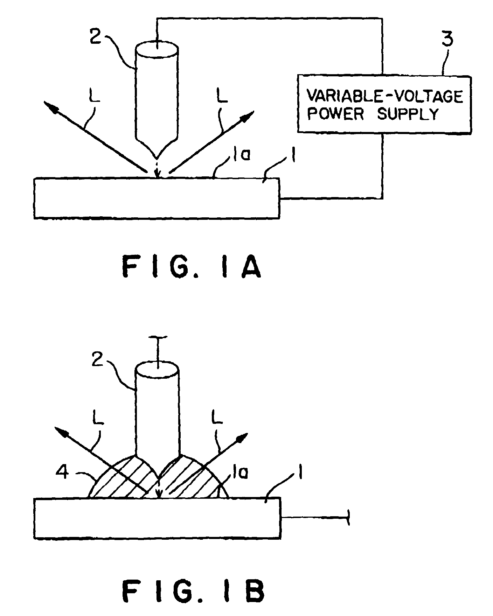

Referring to Fig. 1A, a wavelength-tunable light emitting device in a first embodiment according to the present invention comprises a substrate 1 (first member) provided with an atomic-scale structure, not shown, formed on its surface 1a, a needle member 2 having a sharp-pointed tip for applying a voltage across a gap between the needle member 2 (second member) and the substrate 1 to cause a tunnel current to flow locally through the atomic-scale structure, and a variable-voltage power supply 3 for applying a variable voltage across the gap between the substrate 1 and the needle member 2. A space between the surface 1a of the substrate 1 and the needle member 2 is maintained at a vacuum, and the gap therebetween is a few nm, preferably less than 1 nm. The atomic-scale structure formed on the surface 1a of the substrate 1 is a silicon dangling bond, atoms of a metal, organic molecules, atoms of a metalloid or inorganic molecules. The term 'atomic-scale' as used in this specification signifies the level of a size of a structure that produces light when a tunnel current flows, such as a size in the wide range of angstroms to several hundreds nanometers.

When a predetermined voltage is applied across the gap between the substrate 1 and the needle member 2, a tunnel current flows from the tip of the needle member 2 to the atomic-scale structure formed on the surface 1a of the substrate 1, and light L of a predetermined wavelength is emitted from a local region (tunneling region) in which the tunnel current flows, e.g., the atomic-scale structure formed on the surface 1a of the substrate 1, or the tip of the needle member 2. When the voltage applied across the gap between the substrate 1 and the needle member 2 is varied by the variable-voltage power supply 3 in the range of ±0 to ±30 v, the wavelength of the light L emitted from the tunneling region varies in the range of 200 to 1500 nm.

Thus, the wavelength-tunable light source in the first embodiment is capable of easily and flexibly varying the wavelength of the light L emitted front the tunneling region by simply varying the voltage applied across the gap between the substrate 1 and the needle member 2. Since the light L can be emitted from a local region in which the tunnel current flows, the wavelength-tunable light emitting device can provide an atomic-scale minute wavelength-tunable light source.

The space surrounding the surface 1a of the substrate 1 and the needle member 2 may be filled up with a transparent, insulating covering 4 as shown in Fig. 1B instead of being maintained at a vacuum.

It is noted that the atomic-scale structure is employed to form a desired localized state on the surface 1a of the substrate 1, causing the optical transition between the respective localized state of the substrate 1 and the needle member 2. Therefore, it is obvious that the atomic-scale structure may be eliminated from the substrate 1 as long as the desired localized state can be formed on the surface 1a of the substrate 1.

### Second Embodiment

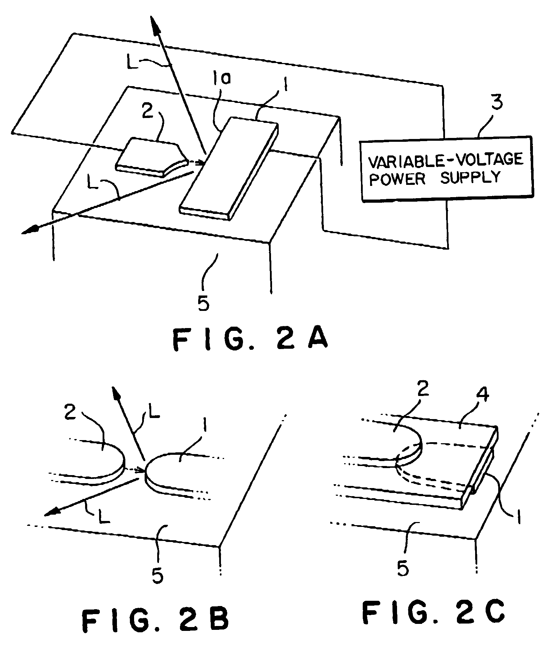

A wavelength-tunable light emitting device in a second embodiment according to the present invention is substantially the same in configuration as the wavelength-tunable light emitting device in the fast embodiment except that the wavelength-tunable light emitting device in the second embodiment has components formed in patterns on an insulating support using thin-film technology and so on. The wavelength-tunable light emitting device in the second embodiment will be described with reference to Figs. 2A, 2B and 2C, in which parts like or corresponding to those of the first embodiment are designated by the same reference numerals and the description thereof will be omitted.

Referring to Fig. 2A, a wavelength-tunable light emitting device in a second embodiment according to the present invention comprises a substrate 1 (first member), a needle member 2 (second member), an insulating support 5 supporting the substrate 1 and the needle member 2 on its surface, and a variable-voltage power supply 3. An atomic-scale structure, not shown, is formed on a side surface 1a of the substrate 1 facing a sharp-pointed tip of the needle member 2. A space between the side surface 1a of the substrate 1 and the needle member 2 is maintained at a vacuum, and the gap therebetween is a few nm, preferably less than 1 nm. When a predetermined voltage is applied across the gap between the substrate 1 and the needle member 2, a tunnel current flows through the atomic-scale structure and light L of a predetermined wavelength is emitted from the tunneling region. When the voltage applied across the gap between the gap between the substrate 1 and the needle member 2 is varied in the range of ±0 to ±30 V, the wavelength of the light L emitted from the the tunneling region varies in the range of 200 to 1500 nm.

Effects and functions of the wavelength-tunable light emitting device in the second embodiment are the same as those of the wavelength-tunable light emitting device in the first embodiment. The substrate 1 and the needle member 2 may be formed in such optional patterns as shown in Fig. 2B. The space between the side surface 1a of the substrate 1 and the needle member 2 may be filled up with a transparent, insulating sheet 4 so as to seal the atomic-scale structure as shown in Fig. 2C instead of being maintained at a vacuum.

Examples of the wavelength-tunable light emitting device shown in Fig. 1A will be described hereinafter.

### Example 1

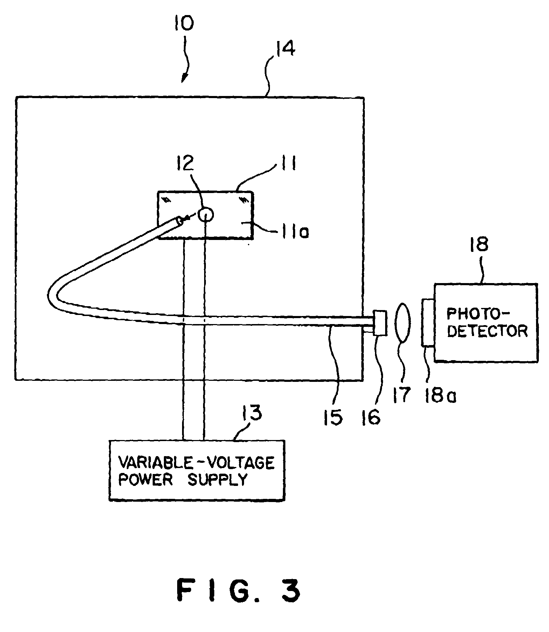

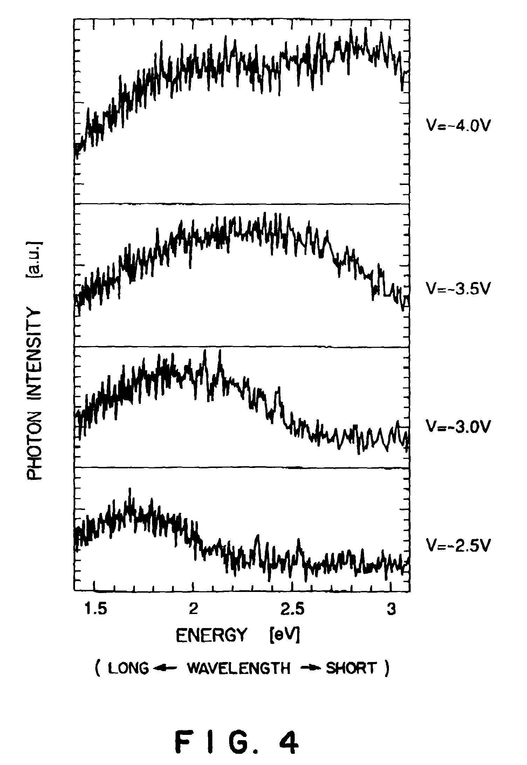

Fig. 3 shows a testing apparatus for testing the characteristics of the wavelength-tunable light sitting device shown in Fig. 1A, and Fig. 4 is a graph showing the relation between wavelength region of light emitted from a dangling bond formed on a Si (001)-(2×1)-D surface and voltage. As shown in Fig. 3, a wavelength-tunable light emitting device in Example 1 has a substrate 11, which corresponds to the substrate 1 shown in Fig. 1A. The substrate 11 has a dangling bond region of a predetermined square area of 14 × 14 nm² formed by extracting deuterium atoms (D) from a local region of a surface of a silicon crystal (Si(001)-(2×1)-D) ended by deuterium atoms (D). The wavelength-tunable light emitting device employs a probe 12 of a scanning tunnel microscope 10 as the needle member 2 shown in Fig. 1A.

The scanning tunnel microscope 10 has a vacuum vessel 14 for containing the substrate 11, the probe 12 for supplying a tunnel current to the dangling bond region by applying a voltage to a local region of the surface 11a of the substrate 11, and a variable-voltage power supply 13 for applying variable voltage across the gap between the substrate 11 and the probe 12. A glass fiber bunch 15 has one end disposed near the probe 12 to collect light emitted from the dangling bond region formed in the surface 11a of the substrate 11 and the other end connected to a light emitting member 16. Light emitted through the light emitting member 16 is converged through a condenser lens 17 on a light receiving surface 18a of a photodetector 18 to measure the energy distribution in the light.

The probe 12 of the scanning tunnel microscope 10 was disposed above the dangling bond region of the substrate 11. Voltages (bias voltage) Vₛ of -2.5 V, -3.0 V, -3.5 V and -4.0 V were applied by the variable-voltage power supply 13 across the gap between the surface 11a of the substrate 11 and the probe 12 and energy distribution in the light was measured by the photodetector 18. A tunnel current Iₜ, that flowed through the surface 11a of the substrate 11 and the probe 12 was 5 nA. Light intensity (photon intensity) measuring time T, i.e., the duration of stay of the probe 12 at a position corresponding to the dangling bond region, was 300 s. As obvious from measured results shown in Fig. 4, the wavelength of the light decreased with the increased negative value of the substrate bias Vₛ.

### Example 2

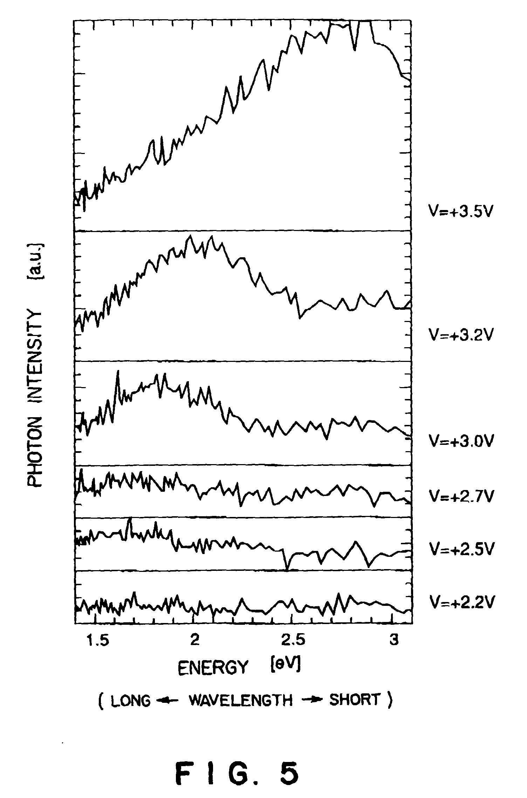

A wavelength-tunable light emitting device in Example 2 of the wavelength-tunable light emitting device in the first embodiment shown in Fig. 1A will be described with reference to Figs. 3 and 5. Fig. 5 is a graph showing the relation between the wavelength of light emitted front a silver cluster formed on a Si(001)-(2×1)-D surface and voltage.

The wavelength-tunable light emitting device in Example 2 has a substrate 11, which corresponds to the substrate 1 shown in Fig. 1A. The substrate 11 has an isolated silver cluster formed by making a circular dangling bond region of 2.5 nm in diameter formed on a Si(100)-(2×1)-D surface attract silver atoms (Ag). The wavelength-tunable light emitting device has a probe 12 of a scanning tunnel microscope 10 as the needle member 2 shown in Fig. 1A.

The probe 12 of the scanning tunnel microscope 10 was disposed above the silver cluster and voltages (bias voltages) Vₛ of +2.2 V, +2.5 V, 3.0 V, +3.2 V and +3.5 V were applied by a variable-voltage power supply 13 across the gap between the substrate 11 and the probe 12 and energy distribution in the light was measured by a photodetector 18. A tunnel current Iₜ that flowed through the surface 11a of the substrate 11 and the probe 12 was 3 nA. Light intensity (photon intensity) measuring time T, i.e., the duration of stay of the probe 12 at a position corresponding to the silver cluster, was 100 s. As obvious from measured results shown in Fig. 5, the wavelength of the light decreased with the increased positive value of the substrate bias Vₛ.

As is apparent from the foregoing description, according to the present invention, the wavelength-tunable light emitting device is capable of easily and flexibly varying the wavelength of the light emitted from the tunneling region by varying the voltage applied across the gap between the substrate and the needle member. Since the light can be emitted from a local region in which the tunnel current flows, the wavelength-tunable light emitting device is able to provide an atomic-scale minute wavelength-tunable light source.

Although the invention has been described in its preferred embodiments with a certain degree of particularity, obviously many changes and variations are possible therein. It is therefore to be understood that the present invention may be practiced otherwise than as specifically described herein without departing from the scope and spirit thereof.

## Claims

1. A wavelength-tunable light emitting device comprising:
a first member;
a second member for locally applying a voltage through a vacuum space or a transparent insulating member to the first member to cause a tunnel current to flow; and
a variable-voltage power supply capable of varying a voltage applied across a gap between the first member and the second member;
wherein the voltage applied across the gap between the first member and the second member is varied by the variable-voltage power supply to vary the wavelength of light emitted from a local region in which the tunnel current flows.

2. The wavelength-tunable light emitting device according to claim 1, wherein the first member has an atomic-scale structure formed on a surface thereof, and wherein the tunnel current flows through the atomic-scale structure.

3. The wavelength-tunable light emitting device according to claim 1, wherein the gap between the first member and the second member is a few nm in length.

4. The wavelength-tunable light emitting device according to claim 2, wherein the atomic-scale structure is a silicon dangling bond formed in the surface of the substrate.

5. The wavelength-tunable light emitting device according to claim 2, wherein the atomic-scale structure is a material selected from the group consisting of atoms of a metal, organic molecules, atoms of a metalloid and inorganic molecules.

6. The wavelength-tunable light emitting device according to claim 1, wherein the first member and the second member are formed in patterns on an insulating support.

7. The wavelength-tunable light emitting device according to claim 1, wherein the first member and the second member are layered on an insulating support, with a transparent insulating layer being inserted into the gap between the first member and the second member.
